Europäisches Patentamt

European Patent Office

Office européen des brevets

(11) Publication number: **0 357 130 B1**

## EUROPEAN PATENT SPECIFICATION

(45) Date of publication of patent specification: **13.04.94**

(51) Int. Cl.5: **A23L 2/28**, A23L 2/26, A23L 1/222, A23L 1/235, A23L 2/16

(21) Application number: **89202120.5**

(22) Date of filing: **22.08.89**

(54) **Process for making shelf-stable orange-juice containing beverages.**

(30) Priority: **02.09.88 GB 8820760**

(43) Date of publication of application:
**07.03.90 Bulletin 90/10**

(45) Publication of the grant of the patent:
**13.04.94 Bulletin 94/15**

(84) Designated Contracting States:
**AT BE CH DE ES FR GB GR IT LI LU NL SE**

(56) References cited:
EP-A- 0 110 638    EP-A- 0 198 591
EP-A- 0 206 738    EP-A- 0 206 739
EP-A- 0 292 047    EP-A- 0 292 048

CHEMICAL ABSTRACTS, vol. 99, no. 5, August 1983 Columbus, Ohio, USA J.Pino et al.: "Fortification of the Aroma and Flavor of Orange Juice Concentrate throughthe Addition of Sweet Orange-Essential Oils" page 432; column 2; ref. no. 37297X

(73) Proprietor: **THE PROCTER & GAMBLE COMPANY**
**One Procter & Gamble Plaza**
**Cincinnati Ohio 45202(US)**

(72) Inventor: **Hislop, John Robert**
**Wiesbadenerstrasse 143C**
**D-6240 Königstein(DE)**
Inventor: **Fischer, Christa-Maria**
**Birkenweg 7**
**D-6242 Kronberg(DE)**
Inventor: **Swaine, Robert Leslie, Jr.**
**12061 Chardon Lane**
**Cincinnati Ohio 45246(US)**
Inventor: **Ford, Andrew James**
**7 Hillside Ave**
**Stoneham Massachusetts 02180(US)**

(74) Representative: **Canonici, Jean-Jacques et al**
**Procter & Gamble European Technical Center N.V.**
**Temselaan 100**
**B-1853 Strombeek-Bever (BE)**

## Description

The present invention relates to a process for making shelf-stable, orange-juice containing beverages, which approach the quality of freshly-squeezed orange juice while using commercially-available sources and equipment.

Hand-squeezed orange juice has many properties which are desirable to the consumer, including a particularly pleasing, fruity aroma and flavour character. Manufacturers of commercially-processed orange juice products have constantly tried to approach this quality; however, the indispensable processing steps which are necessary to generate commercial quantities and provide characteristics such as storage-stability, inevitably involve an alteration of the aroma and flavour character of the processed oranges.

One solution could be to improve the quality of feed juices by working on the quality of the oranges, or on the equipment used in e.g. extraction and finishing, and improve certain sensitive processing steps, such as aroma recovery.

Most of these operations however turn out to be quite expensive to implement.

It has now been found a way to produce shelf-stable beverages approaching the quality of freshly-squeezed orange juices, using commercially-available sources and equipment.

The use of commercially available concentrate sources avoids highly demanding requirements on feed juices/concentrates as well as on the equipment, thus providing a relatively cheap and simple process.

The invention relates to a process for making a shelf-stable, orange juice containing beverage, comprising the following steps :

- adding oil and essence flavour and aroma components to a concentrate source which is produced by an evaporative method;
- a sterilization step; and
- a filling step;

in which said sterilization and filling step said flavour and said aroma components are being kept substantially unchanged in respect to amount (substantially no evaporation) and chemical composition (substantially no chemical reaction), so as to obtain a finished product with a titrabable orange oil level of less than 0.015% and a ratio of the combined amount of acetaldehyde, ethyl butyrate, ethyl 3-hydroxyhexanoate and valencene, to the combined amount of alpha-pinene, myrcene, linalool, 4-terpineol, alpha-terpineol and nootkatone of at least 1.2 to 1.

In the process of the invention, the starting material is represented by a concentrate source, produced by an evaporative method.

Said concentrate source is represented by an orange juice concentrates, commercially available and widely used in the orange juice industry. After extraction of the juice from the orange, these concentrates are produced from the juice, by evaporation techniques.

The standard evaporative system for concentrating feed juice utilizes temperature accelerated short-time evaporators (TASTE). TASTE evaporators concentrate by heating a flowing film of the feed juice with steam or vapor previously generated from the feed juice. In a standard seven-stage, four-effect TASTE evaporator system, the feed juice is heated at progressively higher temperatures, starting at 40°C, and passing through a maximum evaporative temperature at 96°C, followed by heating at progressively lower temperatures ending at 40°C where the concentrated juice attains a solids level of 63° Brix. See Nagy et al, Citrus Science and Technology, Vol. 2 (1977), pp. 217-218.

Examples of concentrate sources which can be used in the present process include Brazilian concentrate, having the following characteristics :

°Brix 65; Acid level 4.5 to 5%; titratable oil level 0.008 to 0.013 % and Moroccan concentrate having the following characteristics : °Brix 65; Acid level 5.5 to 6%; peel oil level 0.006% to 0.012%.

It is optional, but highly desirable to include, at this stage, both sensible and background pulp to the concentrate source; indeed, sensible pulp composed of relatively large particles (greater than 0,5 mm) contributes importantly to the freshly-squeezed impression of the finished product; while background pulp, composed of fine particles obtained by high-pressure homogenisation of sensible pulp, contributes to the monthfeel and thickness impression of the finished product.

According to a particular feature of the present process, to the concentrate source are added oil and essence flavour and aroma components;

It is by a careful selection of the components to be added, and their levels, that it is possible to formulate a product which approaches the flavour and aroma characteristics of freshly-squeezed orange juice, as it is explained hereinafter.

It is desirable in the process of present invention to minimize the level of titratable oil present in the finished product. The level of titratable oil in the finished product should be about 0.015% or less,

2

preferably about 0.012% or less. The level of titratable oil will in fact correspond to the level of limonene, the principal constituent of orange oil. The level of oil present in the orange juice can greatly affect its orange aroma and flavour composition.

Indeed, orange oil does contain flavour and aroma ingredients which are desirable, but the level should be kept low, since at high levels limonene and other orange flavour compounds present in orange oil tend to be bitter or burning in character. In addition, the terpene (limonene) compounds which can be oxidized or thermally degraded to less desirable orange flavour compounds. High levels of orange oil can also adversely affect the partitioning of desirable water-soluble orange flavour compounds into the oil phase.

The importance of minimized titratable oil content on the orange aroma and flavour quality of the finished product is particularly shown by a ratio based on the level of more desirable orange compounds, relative to the level of less desirable orange compounds. For the purposes of the present invention, the level of more desirable orange compounds is based on the combined amount of acetaldehyde, ethyl 3-hydroxyhexanoate, ethyl butyrate, octanal and valencene. Acetaldehyde, ethyl 3-hydroxyhexanoate, ethyl butyrate are highly volatile compounds which contribute to the "freshness" of the juice. Octanal and valencene are less volatile compounds which contribute desirable "orangey" flavour character to the juice.

For the purposes of the present invention, the level of less desirable orange compounds is based on the combined amount of alpha-pinene, myrcene, linalool, 4-terpineol, alpha-terpineol and nootkatone. These less desirable compounds represent components obtained from the peel portion of the fruit obtained during squeezing, as well as undesirable degradation products.

For the purpose of the present invention, the ratio between the level of above more desirable components and the level of above less desirable components, should be at least 1.2 : 1.

It is a particular feature of the present process that a certain amount of substantially terpene-free orange oil be added to the concentrate source.

This will make sure that the level of degradation products derived from limonene are kept within the limits set hereinabove, while the level of desirable components present in orange oil is boosted.

The level of added terpene-free oil is from 3 ppm to 15 ppm, by weight of the finished product.

Depending on the amount of titratable oil in the concentrate source, and in the pulp, if pulp is used, a quantity of regular orange oil (not deterpenated) can be added, in an amount of from 0.001% to 0.022% of the finished product.

When regular orange oil is added to the concentrate source, the level of added terpene-free oil should be such that the ratio between the level of terpene-free oil and the level of added regular orange oil is in the range from 1 to 0.7 to 1 to 73, preferably from 1 to 3 to 1 to 43.

The levels of regular orange oil and terpene-free orange oil added to the concentrate source will of course be such that the total level of titratable oil in the finished product remains within the limits set forth hereinabove.

In order to respect the ratio of more desirable to less desirable aroma and flavour components, which has been set, it is also necessary to add to the concentrate source, a flavour/aroma essence, which is selected from the group of acetaldehyde, nonanal, octanal, decanal, ethyl-butyrate, ethyl-3-hydroxyhexanoate, valencene. Preferred in the present invention is a flavour component consisting mainly of acetaldehyde as a 5% solution in Ethanol; the level of added flavour/aroma component is in the range from 0.0001% to 0.0009% of the finished product.

In addition to the individual flavour/aroma essences mentioned hereinabove, it may be desirable to use other sources of aroma/flavour materials.

For example, commercial orange essences such as Florex 50041 (20:1 ethyl butyrate to hexanal ratio) and 56010, made by Florex Flavors Ltd. of Eaton Park, Florida (subsequently purchased by Redd Citrus Specialities Division of Hercules), and Natural Orange Aroma (#070570), Natural Orange Aroma Plus (#375002U), and Enriched Orange 3 Fold Essence Oil (#375212U), made by Redd Citrus Specialties of Safety Harbor, Florida, and commercial orange oils such as Florex 5801R, Citriff Orange #15980267, made by International Flavors and Fragrances, Inc. of New York City, New York, Valencene 85-90% purity (Citrus & Allied), made by Citrus & Allied Essences, Ltd. of Floral Park, N.Y.) and cold pressed orange oils, can be used to supply at least a portion of the aroma/flavor materials for orange juice products of the present invention. Non-orange sources of natural flavorings such as Orange with Other Natural Flavors #15980828, made by International Flavors and Fragrances, Inc., and Natural Citrus Enhancer, Orange type # D8118 made by Fries & Fries, Inc. of Cincinnati, Ohio, can also be used as a source of aroma/flavor materials.

It is another important requirement of the present process that, in order to obtain a shelf-stable finished product, the flavour and aroma components remain unchanged throughout the process, at least during the sterilization and filling steps; this means that the aroma and flavour components should not evaporate, and that they should not be chemically modified by e.g. the effect of temperature.

One way to avoid evaporation is to provide for nitrogen blanketing of the processing equipment, while one way to avoid chemical modification is the use of a ultra high temperature (UHT) sterilization process, such as described in EPA 247245.

According to a preferred embodiment of the present invention, the above goal will be better achieved if the filling step occurs at a temperature not exceeding 25°C ("cold filling"), since at this stage of the process, it is practically difficult to keep the processing equipment completely sealed, and a filling at elevated temperatures would result in evaporation of flavour and aroma components.

The shelf-stable orange-juice containing beverages made by the process of the invention contain from 20% to 100%, preferably from 50% to 100%, of orange juice. Most preferably, the orange-juice content is of 100%, which means the finished product herein is an orange juice.

In the context of the preferred execution. i.e. for orange juice finished products, it has been found that a Brix to Acid ratio of the finished product in the range of from 12.5 to 14, preferably 12.8 to 13.8, is particularly beneficial to the overall flavour quality of the product; it has been noticed that the selection of such a relatively low range of Brix to Acid ratio, combined with the unique flavour and aroma characteristics derivable from present process, provides an unexpected high, consumer-noticeable, flavour and aroma impact.

Example

N.B. Except for the percentage figures for the concentrate blend, and level of background pulp and added regular orange oil all levels of ingredients are expressed in weight per cent of finished product.

An orange juice is prepared according to the process of the present invention.

The concentrate source is constituted by a blend of 25% regular Moroccan Valencia late concentrate and 75% regular Brazilian concentrate.

Pulp is added, consisting of sensible pulp (4%) and background pulp (11% volume of finished product).

Concentrates and pulp together provide a total level of titratable oil of 0,012% in finished product.

The concentrate and the pulp are blended continuously, via continuous liquid processing, with :

- 0.009% (% vol.) of added regular orange oil and 0.0012% of terpene-free Florida orange oil which were pre-blended together.
- 0.008% of acetaldehyde as a 5% solution in ethanol
- 0.17% of Natural Orange Aroma Plus # 375002U by Redd Citrus Specialities.

The mixture is agitated in a small agitated surge tank, under nitrogen blanket. Then, it is continuously diluted with deionized/deaerated water.

The diluted mixture is fed directly to the UHT equipment, and after sterilization the finished product is stored in an agitated aseptic tank under nitrogen pressure.

Packs for the finished product are steam sterilized, purged with carbon dioxide, filled with product, the headspace is purged with carbon dioxide, and the packs are sealed.

The characteristics of the finished product are as follows (taking into account absorption by the pack) :

| | |
|---|---|
| Brix (uncorr) | 11.3 |
| Acid | 0.883 |
| Brix/Acid ratio | 13 |
| Titratable oil level | 0.012% |
| Background pulp | 17.5% (vol % of finished product) |
| Sensible pulp | 3.8% |

Composition :

| Desirable ingredients | p.p.b. |
|---|---|
| Acetaldehyde | 4 650 |
| Ethyl 3-hydroxyhexanoate | 100 |
| Ethyl-butyrate | 370 |
| Octanal | 538 |
| Valencene | 392 |

| Less desirable ingredients | |
|---|---|
| Alpha-Pinene | 208 |
| Myrcene | 977 |
| Linalool | 1 603 |
| 4-Terpineol | 127 |
| Alpha-terpineol | 698 |
| Nootkatone | 87 |

Ratio between desirable and less desirable components : 1.6 : 1

The orange juice prepared according to the present example exhibits flavour and aroma characteristics very close to those of freshly-squeezed orange juice, and shows an excellent stability upon storage.

Analytical methods

The levels of above ingredients are determined by the following methods :

Capillary column gas chromatographic analysis of aroma/flavour compounds other than ethanol, methanol and acetaldehyde

A standard mixture solution is prepared by adding dichloromethane (10 ml) to a 50 ml volumetric flask, followed by various compounds present in orange juice in the amounts indicated below :

| Component | Volume of pure component (micro-liters in 50 ml final vol.) | Density at 21°C | micrograms/ml in calibration solution |
|---|---|---|---|
| Ethyl acetate | 150 | 0.902 | 27.06 |
| Ethyl vinyl keton | 25 | 0.845 | 4.23 |
| Ethyl propionate | 25 | 0.891 | 4.46 |
| Methyl butyrate | 25 | 0.898 | 4.49 |
| Hexanal | 50 | 0.834 | 8.34 |
| Ethyl butyrate | 150 | 0.8785 | 26.36 |
| 2-Hexenal | 25 | 0.846 | 4.23 |
| 3-Hexenol | 25 | 0.846 | 4.23 |
| Hexanol | 25 | 0.819 | 4.10 |
| Alpha-pinene | 50 | 0.8582 | 8.58 |
| Beta-pinene | 25 | 0.8654 | 4.33 |
| 3yrcene | 50 | 0.8013 | 8.01 |
| Octanal | 50 | 0.8211 | 8.21 |
| Limonene | 400 | 0.8411 | 67.29 |
| Gamma-terpinene | 25 | 0.8502 | 4.25 |
| Octanol | 25 | 0.8300 | 4.15 |
| Linalool | 150 | 0.8700 | 26.10 |
| Nonanal | 25 | 0.8264 | 4.13 |
| Citronellal | 25 | 0.8573 | 4,29 |
| Terpinen-4-ol | 100 | 0.933 | 18.66 |
| Alpha-terpineol | 100 | 0.9337 | 18.67 |
| Decanal | 50 | 0.8300 | 8.30 |
| Citral | 50 | | |
| Neral | (20) | 0.8800 | 3.52 |
| Geranial | (30) | 0.8888 | 5.33 |
| D-carvone | 25 | 0.9608 | 4.80 |
| Geraniol | 25 | 0.8894 | 4.45 |
| Perillaldehyde | 25 | 0.965 | 14.83 |
| Dodecanal | 25 | 0.8352 | 4.18 |
| Caryophyllen | 25 | 0.9075 | 4.54 |
| Valencene | 50 | 0.8411 | 8.41 |
| Nootkatone | 50 | 0.8411 | 8.41 |

After all of the above compounds are added to the flask, the standard mixture is diluted to volume with dichloromethane.

An internal standard solution is also prepared by pipetting 150 microl. of n-propylbenzene into a 100 ml volumetric flask which is subsequently brought to volume with dichloromethane.

A calibration solution is prepared by pipetting 4.90 ml of dichloromethane into a 10 ml vial which is then spiked with 50 microl. of the internal standard solution and 50 microl. of the standard mixture solution.

A sample solution is prepared by homogenizing (Ultra-turrax mixer, 30 seconds at 20 000 rpm) orange juice with 5 ml of dichloromethane 50 microl. of internal standard solution. The dichloromethane phase is separated by centrifugation (30 minutes, 31.000 g, 5°C) and subsequently transferred into a screw-cap vial by means of a Pasteur pipette. This fraction is further analysed by capillary gas chromatography.

A Hewlett-Packard 5880 A Gas Chromatograph with recorder, integrator and equipped on-column injector is used in the analysis. The following conditions are used :

Carrier gas :                    helium, column head pressure : 0.5 bar (flow 1 to 2 ml/min)
Detector :                       260°C
Injector temperature :        off
Temperature programmation :

| Initial temperature | 40°C |
|---|---|
| Initial hold | 9 min |
| Program rate 1 | 3.5°C/min |
| Final Temperature 1 | 140°C |
| Program rate 2 | 6°C/min |
| Final temperature 2 | 260°C |
| Final hold | 10 min |
| Post run temperature | 300°C |
| Post run temp. hold | 15 min |

Attenuation :                $2^2$
Peak treshold :            2

One microl. of the calibration solution is injected into the gas chromatograph to establish the retention time and response factor for the various compounds present. A 1 microliter portion of the sample solution (dichloromethane extract) is injected into the gas chromatograph and then compared against the calibration chromatogram to identify the various compounds. The amount of each compound in the sample solution (microgram/gram) is calculated as follows :

$$\frac{\text{Peak area of compound}}{\text{Peak area of standard internal standard}} \times \frac{\text{Response factor of compound}}{\text{Response factor of internal standard}} \times \text{Amount of Internal}$$

### Packed column gas chromatographic analysis of ethanol, methanol and acetaldehyde

The method is described in Flussiges Obst, Heft 4/1984 H. Tanner & H. Limacher p. 182 to 184.

### Titratable orange oil content (Scott Oil Method)

This method is based on the Scott Oil Method described in Nagy et al, Citrus Science and Technology, Vol. 2 (1977), pp. 506-508. In this method, orange oil is distilled from an 2-propanol solution of the juice sample and then titrated with a standard KBr-KBrO$_3$ solution in an acidic medium.

A 0.025$\underline{N}$ KBr-KBrO$_3$ titrant solution is prepared by diluting 1 part of a 0.1$\underline{N}$ KBr-KBrO$_3$ solution (from RICCA Chemical Company, Arlington, Texas, Catalog No. 1170), with 3 parts distilled water. An acidic

EP 0 357 130 B1

indicator solution is also prepared by mixing together 5 ml. of a 0.1% methyl orange solution with 1000 ml. of a dilute hydrochloric acid solution (2 parts distilled $H_2O$, 1 part HCl).

A standard Scott Peel Oil Distillation Apparatus is used in this method.

This apparatus essentially consists of a flat bottom distillation flask, an inclined adaptor and a distillation condenser.

A blank titration value (TB) is obtained by titrating 3 separate mixtures containing 25 ml. of 2-propanol and 10 ml. of the acidic indicator solution with the titrant solution and then dividing the total ml. of titrant solution used by 3.

25 ml. of a well mixed orange juice sample is pipetted into the distillation flask containing boiling chips or beads, followed by the addition of 25 ml. of 2-propanol. The mixture in the distillation flask is then heated to a temperature of about 85°C. Distillate is collected until condensation of water vapor appears on the transfer tube (approximately 35 ml. of distillate). To the distillate is then added 10 ml. of the acidic indicator solution. While being stirred with a magnetic stirrer, the acidic distillate solution is titrated with titrant solution to a colorless endpoint. The volume of titrant solution required to reach the endpoint (TS) is recorded. The % titratable orange oil for the sample is then obtained by the following calculation :

% titratable orange oil = (TS-TB) x 0.004.

## Claims

1. A process for making a shelf-stable, orange juice containing beverage, comprising the following steps :
   - adding oil and essence flavour and aroma components to a concentrate source which is produced by an evaporative method;
   - a sterilization step; and
   - a filling step;
   in which said sterilization and filling step said flavour and said aroma components are being kept substantially unchanged in respect to amount (substantially no evaporation) and chemical composition (substantially no chemical reaction), so as to obtain a finished product with a titrabable orange oil level of less than 0.015% and a ratio of the combined amount of acetaldehyde, ethyl butyrate, ethyl 3-hydroxyhexanoate and valencene, to the combined amount of alpha-pinene, myrcene, linalool, 4-terpineol, alpha-terpineol and nootkatone of at least 1.2 to 1.

2. The process of claim 1 wherein the added oil and essence flavour and aroma components are selected from regular orange oil, terpene-free orange oil, acetaldehyde, octanal, nononal, decanal, ethyl butyrate, ethyl-3-hydroxyhexanoate, valencene.

3. The process of claim 2 wherein the added oil and essence flavour and aroma components comprise regular orange oil, terpene-free orange oil and acetaldehyde.

4. The process of claim 3 wherein the amount of added terpene-free orange oil is such that the weight ratio between added regular orange oil and terpene-free orange oil is in the range of from 0.7:1 to 73:1.

5. The process of claim 2 wherein the added oil and essence flavour and aroma components comprise terpene-free orange oil and acetaldehyde.

6. The process of claims 3 and 5 wherein the level of added terpene-free oil is of 3 ppm to 15 ppm by weight of the finished product.

7. The process of claim 1 wherein the orange-juice-containing beverage contains 100% orange juice.

8. The process of claim 5 wherein the orange juice has a Brix to Acid ratio of from 12.8 to 13.8.

9. The process of claim 1 which contains the steps of ultra high temperature (UHT) sterilization and cold-filling.

8

## Patentansprüche

1. Verfahren zur Herstellung eines lagerfähigen orangensafthältigen Getränkes, welches die folgenden Stufen umfaßt:
   - Zugabe von Öl- und Essenzen-Geschmackstoff- und Aromastoffkomponenten zu einer Konzentratquelle, welche nach einem Verdampfungskonzentrationsverfahren erzeugt worden ist;
   - eine Sterilisierungsstufe; und
   - eine Abfüllstufe;

   in welcher Sterilisierungsstufe und in welcher Abfüllstufe die Geschmackstoff- und Aromastoffkomponenten hinsichtlich ihrer Menge (es findet im wesentlichen keine Verdampfung hievon statt) und hinsichtlich ihrer chemischen Zusammensetzungen (es findet im wesentlichen keine chemische Reaktion statt) im wesentlichen unverändert erhalten bleiben, um ein fertiges Produkt mit einem Gehalt an titrierbarem Orangenöl von weniger als 0,015 % und mit einem Verhältnis von der kombinierten Menge von Acetaldehyd, Ethylbutyrat, Ethyl-3-hydroxyhexanoat und Valencen zu der kombinierten Menge von alpha-Pinen, Myrcen, Linalool, 4-Terpineol, alpha-Terpineol und Nootkaton von wenigstens 1,2 : 1 zu erhalten.

2. Verfahren nach Anspruch 1, wobei die zugesetzten Öl- und Essenzen-Geschmackstoff- und Aromastoffkomponenten aus regulärem Orangenöl, terpenfreiem Orangenöl, Acetaldehyd, Octanal, Nonanal, Decanal, Ethylbutyrat, Ethyl-3-hydroxyhexanoat und Valencen ausgewählt sind.

3. Verfahren nach Anspruch 2, wobei die zugesetzten Öl- und Essenzen-Geschmackstoff- und Aromastoffkomponenten reguläres Orangenöl, terpenfreies Orangenöl und Acetaldehyd umfassen.

4. Verfahren nach Anspruch 3, wobei die Menge des zugesetzten terpenfreien Orangenöles eine solche ist, daß das Gewichtsverhältnis zwischen dem zugesetzten regulären Orangenöl und dem zugesetzten terpenfreien Orangenöl in einen Bereich von 0,7:1 bis 73:1 fällt.

5. Verfahren nach Anspruch 2, wobei die zugesetzten Öl- und Essenzen-Geschmackstoff- und Aromastoffkomponenten terpenfreies Orangenöl und Acetaldehyd umfassen.

6. Verfahren nach den Ansprüchen 3 und 5, wobei die Menge des zugesetzten terpenfreien Öles 3 ppm bis 15 ppm des Gewichtes des fertigen Produktes beträgt.

7. Verfahren nach Anspruch 1, wobei das orangensafthältige Produkt zu 100 % aus Orangensaft besteht.

8. Verfahren nach Anspruch 5, wobei der Orangensaft ein Verhältnis des Brix-Wertes zu dem Säure-Wert von 12,8 bis 13,8 aufweist.

9. Verfahren nach Anspruch 1, welches die Stufen einer Ultrahochtemperatur-(UHT)-Sterilisierung und eines Kalt-Abfüllens umfaßt.

## Revendications

1. Procédé pour préparer une boisson stable au magasinage, et contenant du jus d'orange, le procédé comprenant les étapes suivantes :
   - l'addition de constituants d'huiles et d'essences de saveur et d'arôme à une source de concentré qui est produite par un procédé d'évaporation;
   - une étape de stérilisation; et
   - une étape de remplissage;

   et, au cours desdites étapes de stérilisation et de remplissage, lesdits constituants de saveur et d'arôme sont maintenus sensiblement sans changement concernant la quantité (il n'y a pratiquement pas d'évaporation) et la composition chimique (il n'y a pratiquement pas de réaction chimique), de façon à obtenir un produit terminé ayant un taux titrable d'huile d'orange représentant moins de 0,015 % et présentant un rapport entre la quantité combinée d'acétadéhylde, de butyrate d'éthyle, de 3-hydroxyhexanoate d'éthyle et de valencène, à la quantité combinée d'alpha-pinène, de myrcène, de linalool, de 4-terpinéol, d'alpha-terpinéol et de nootkatone valant au moins 1,2 à 1.

**2.** Procédé selon la revendication 1, dans lequel les constituants d'huiles et d'essences de saveur et d'arôme que l'on ajoute sont choisis dans l'ensemble consistant en une huile d'orange normale, une huile d'orange dépourvue de terpène, l'acétaldéhyde, l'octanal, le nonanal, le décanal, le butyrate d'éthyle, le 3-hydrohexanoate d'éthyle et le valencène.

**3.** Procédé selon la revendication 2, dans lequel les constituants d'huiles et d'essences de saveur et d'arôme que l'on ajoute comprennent de l'huile d'orange normale, de l'huile d'orange sans terpène, et de l'acétaldéhyde.

**4.** Procédé selon la revendication 3, dans lequel la quantité d'huile d'orange sans terpène que l'on ajoute est telle que le rapport pondéral entre l'huile d'orange normale que l'on ajoute et l'huile d'orange sans terpène se situe entre 0,7 : 1 et 73 : 1.

**5.** Procédé selon la revendication 2, dans lequel les constituants d'huiles et d'essences de saveur et d'arôme que l'on ajoute comprennent de l'huile d'orange sans terpène et de l'acétaldéhyde.

**6.** Procédé selon les revendications 3 et 5, dans lequel le niveau ou taux d'huile sans terpène que l'on ajoute représente de 3 ppm à 15 ppm (parties par million) en poids du produit terminé.

**7.** Procédé selon la revendication 1, dans lequel la boisson contenant du jus d'orange contient 100 % de jus d'orange.

**8.** Procédé selon la revendication 5, dans lequel le jus d'organge présente un rapport entre degré Brix et acide allant de 12,8 à 13,8.

**9.** Procédé selon la revendication 1, qui comporte les étapes de stérilisation à ultra haute température (UHT) et d'emplissage à froid.